Europäisches Patentamt

(19) European Patent Office

Office européen des brevets

(11) Publication number: **0 461 901 A2**

## (12) EUROPEAN PATENT APPLICATION

(21) Application number: **91305361.7**

(22) Date of filing: **13.06.91**

(51) Int. Cl.⁵: **C09D 5/34**, C09K 3/12

(30) Priority: **15.06.90 US 538776**

(43) Date of publication of application:
**18.12.91 Bulletin 91/51**

(84) Designated Contracting States:
**AT BE CH DE DK ES FR GB IT LI LU NL SE**

(71) Applicant: **AMERICAN COLLOID COMPANY**
**One North Arlington, 1500 West Shure Drive**
**Arlington Heights, Illinois 60004 (US)**

(72) Inventor: **Alexander,William**
**605 Garrett, E-36**
**Evanston Illinois 60201 (US)**

(74) Representative: **McCall, John Douglas et al**
**W.P. THOMPSON & CO. Coopers Building**
**Church Street**
**Liverpool L1 3AB (GB)**

(54) Bentonite composition structurally supported with flexible material and method.

(57) There is disclosed an article of manufacture (and a method of using same) useful for preventing flow of water therethrough by hydration of a water-swellable clay composition comprising a cohesive mass of a water-swellable clay (12) in essentially non-hydrated form, said water-swellable clay (12) present in an amount of at least 20% by weight of the total composition, and a non-aqueous liquid binder capable of adhering the clay together without substantial hydration of said clay, said composition having a flexible, elongated structural support material (40; 42; 44) embedded in said composition to prevent the composition from being displaced from its intended location in use. Preferably the clay composition is a non-hydrated, bentonite composition including an intimate mixture of bentonite clay with a non-aqueous liquid binder, such as polypropene or polybutene, to form a cohesive, non-hydrated, shapeable bentonite composition, and the composition is adhered to a structural, flexible, support material either within the interior of the composition, or on at least one major outer surface of the composition. In one embodiment of the invention, an elastomer such as partially cross-linked butyl rubber is included in the composition. The elastomer has sufficient resiliency to stretch upon hydration of the bentonite and adds structural integrity to the composition. Additional additives may be included in the formable bentonite composition, such as tackifiers, viscosity modifiers, thickeners, extenders and the like.

*FIG. 2*

The present invention relates to a fully expandable, non-hydrated bentonite composition capable of expanding upon hydration and structurally supported in its center or on an outer surface to prevent the composition from losing its shape due to temperature differences, thereby maintaining the structural integrity of the composition. More particularly, the present invention is directed to a composition including a non-hydrated bentonite intimately contacted, in one embodiment, with a liquid binder, such as the polypropene or polybutene, and an elastomer, as disclosed in this assignee's prior Patent Nos. 4,279,547; 4,534,925; 4,534,926 and 4,668,724, to provide a formable and shapable non-aqueous bentonite composition adhered to a flexible support, centrally or on an exterior surface, particularly useful as a water barrier. The bentonite composition can be extruded in the form of a rope, rod, sheet or the like and includes a water-swellable bentonite and one or more non-aqueous liquid binders capable of adhering bentonite particles together in a formable or shapeable cohesive composition without substantially swelling the bentonite, with or without an elastomer, for additional cohesiveness to prevent the seepage of water through the bentonite composition. In one embodiment, the bentonite composition includes an elastomer, such as butyl rubber, having sufficient resilience to stretch or expand with the expanding bentonite upon hydration and to aid in maintaining the structural integrity and cohesiveness of the composition.

Many attempts have been made to provide a bentonite composition having sufficient cohesiveness and structural integrity to provide a modeling clay-like or putty-like consistency. Such bentonite compositions can be in a paste or putty-like form for handleability so that a desired quantity can be applied in a selected location for water seepage control. A major problem associated with attempting to provide a bentonite composition with a paste or putty-like consistency in order to provide the desired handleability is that many additives used to provide such consistency interfere with the swelling capacity of the bentonite. One attempt to provide a bentonite composition with a putty-like consistency is described in the Bechtner U.S. Patent No. 2,277,286 wherein water is added to the bentonite to hydrate a portion of the bentonite to achieve the desired consistency. The resulting composition is a putty-like mass which is sufficiently cohesive as a result of the partial swelling of the bentonite, but the swellability of the bentonite is substantially retarded since only about 70-80% of its potential absorbing and swelling characteristics are retained. Further, the Bechtner mass will only adhere to surfaces so long as it remains moist.

Other attempts have been made to provide a bentonite compositinn having a handleable consistency such as in a paste-like or putty-like form while retaining the full swelling properties of the bentonite by the addition of non-aqueous liquids, such as set forth in this assignee's prior patent 4,279,547 and the McGroarty patent 4,316,833. Generally, the addition of liquid organic additives to bentonite will inhibit the swelling capacity of the bentonite to various degrees depending on the characteristics of the organic additive, and most notably dependent upon the polarity of the organic additive. In accordance with the McGroarty Patent No. 4,316,833, an attempt is made to provide a cohesive bentonite composition having a paste-like consistency without hydrating the bentonite by the addition of adhesive agents, such as hydrocarbon resins. In accordance with the McGroarty patent 4,316,833 "if the adhesive penetrates the bentonite, it will destroy the ability of the bentonite to swell and thus will destroy its waterproofing capabilities". In an attempt to prevent the adhesive agent penetration, the McGroarty bentonite is first saturated with a liquid fluidizer, such as mineral spirits, to prevent the adhesive agent from substantially penetrating the bentonite particles after saturation with the liquid fluidizer.

This assignee's prior patents 4,209,568 and 4,279,547 describe another attempt to provide a bentonite composition having a consistency for good handleability such as a stiff putty-like consistency without hydrating the bentonite and without saturation of the bentonite with bentonite-inhibiting organics by forming a gel and adding the bentonite to the gel to prevent bentonite saturation while maintaining its swellability. The gelled bentonite compositions disclosed in Clem Patent Nos. 4,209,568 and 4,279,547 are suitable as the water-swellable clay compositions in accordance with the present invention, which patents are hereby incorporated by reference.

The Ishido patent 4,366,284 discloses a bentonite composition having 10-40% rubber, 10-40% plasticizer and 10-20% silicic filler.

It has been found that the composition set forth in this assignee's prior patents 4,279,547; 4,534,925; 4,534,926; and 4,668,724, which patents are hereby incorporated by reference, and in the McGroarty patent 4,316,833, are satisfactory in terms of composition consistency and maintenance of swellability and only allow swelling of the bentonite, prior to water hydration, to a limited extent. These compositions, however, when extruded or otherwise shaped in the form of a rope, rod or sheet, tend to flow and thereby change their shape from their shape as extruded or otherwise formed, sagging from their intended location as a result of an increase in environmental temperature. This change in composition consistency due to temperature change sometimes results in the composition moving from its intended location in an area of potential water flow, thereby becoming ineffective as a water barrier.

In accordance with the present invention, it has been found that a flexible structural supporting material adhered in the interior, e.g., at its center, or on an exterior surface of the bentonite compositions, unexpectedly prevents the compositions from substantially flowing or being displaced from their intended locations due to environmental temperature changes. In accordance with one embodiment of the present invention, the bentonite composition is extruded or otherwise formed as an annular coating around a central flexible support rope, film or fabric to prevent the composition from sagging when disposed in an area of potential water flow. In accordance with another embodiment of the present invention, the composition is adhered on an outer major surface to an embedded flexible, water-penetrable fabric, matt, or mesh support material to prevent the composition from sagging. In both embodiments, the support material should not have an elongation greater than about 25%, at 40°C, so that the composition and support material do not substantially move, as a result of a rise in temperature, out of a predetermined location.

In brief, the present invention is directed to a non-hydrated, bentonite composition comprising an intimate mixture of bentonite clay with a non-aqueous liquid binder to form a cohesive, non-hydrated, shapeable bentonite composition, and the composition is adhered to a structural, flexible support material either within the interior of the composition, or the support material is embedded in at least one major outer surface of the composition. In accordance with one embodiment of the present invention, an elastomer such as partially cross-linked butyl rubber is included in the composition. The elastomer has sufficient resiliency to stretch upon hydration of the bentonite and adds structural integrity to the bentonite composition. Additional additives may be included in the formable bentonite composition, such as tackifiers, viscosity modifiers, thickeners, extenders and the like.

In accordance with a preferred embodiment, polypropene and/or polybutene adds sufficient tackiness to the bentonite composition and completely wet-out the clay upon initial intimate mixing to prevent bentonite-inhibiting additives from substantially inhibiting the swelling properties of the bentonite. The adhesive quality is not essential, however, since the composition can be nailed or otherwise fastened to suitable support materials. The polypropene and/or polybutene components of the preferred composition of the present invention do not dry out over substantial periods of time. Additionally, the capacity for polypropene and polybutene to wet-out the bentonite enables a bentonite composition to contain 85-90% bentonite with 10-15% polypropene and/or polybutene while maintaining tackiness for ease in securing the composition to the structural support material and cohesive handleability of the composition.

In accordance with another embodiment of the present invention, the bentonite composition adhered to the support material includes a water-swellable clay, such as bentonite, an elastomer, such as partially cross-linked butyl rubber, and a plasticizer compatible with the elastomer. The elastomer is capable of stretching with the clay upon hydration.

Accordingly, one aspect of the present invention is to provide a non-hydrated, cohesive bentonite composition adhered to a structural support material, wherein the clay composition includes a water-swellable clay and one or more liquid binders to provide a structurally supported water-swellable bentonite clay composition in a cohesive, formable mass, capable of substantially complete hydration upon contact with water, and capable of maintaining its intended location upon a dramatic change in temperature conditions surrounding the composition.

Another aspect of the present invention is to provide a method of manufacturing a non-hydrated, cohesive bentonite composition containing bentonite clay and one or more clay binders secured to a structural support material either on the interior of the composition, or on an exposed outer surface thereof.

Still another aspect of the present invention is to provide a non-hydrated, cohesive bentonite composition having new and unexpected structural integrity for manufacture in rope, rod or sheet form or other desired shapes including bentonite, one or more binders, such as polypropene and/or polybutene, with or without an elastomer, wherein a flexible structural support material is embedded within a longitudinal center or at least one of the major outer surfaces of the composition.

A further aspect of the present invention is to provide a method of manufacturing a non-hydrated, cohesive bentonite composition having new and unexpected structural integrity for manufacture in rope, rod, sheet or other shaped forms including bentonite and one or more non-aqueous liquid clay binders, with or without an elastomer, wherein a flexible structural support material is embedded within the material so that at least most of the support material is surrounded by the composition.

Another aspect of the present invention is to provide an article of manufacture comprising 35 to 90% by weight bentonite and 10-65% by weight of a non-aqueous binder for the clay, secured on the interior or on an exposed exterior surface, to a flexible structural support material.

Still other aspects of the present invention are to provide bentonite-binder compositions, articles and method of manufacturing including combining bentonite and a clay binder, with or without an elastomer, and/or a plasticizer compatible with the elastomer, resulting in a composite composition having embedded therein a flexible support material to provide articles having extremely good structural integrity wherein the bentonite is not substantially inhibited from swelling and the composition maintains its position with environmental temperature changes.

In accordance with the preferred embodiments of the present invention, a water swellable clay intimately mixed with a non-hydrating binder will provide a bentonite composition having a desired consistency ranging from a soupy liquid to a relatively stiff putty-like solid capable of adhering to a flexible support material to prevent the clay composition from being displaced when the composition is disposed in its intended location. The water swellable clay, for example bentonite, is included in the composition in an amount of about 35% to about 90% by weight and a non-aqueous, substantially uninhibiting liquid binder is included in the composition in an amount of about 10% to about 65% by weight of the composition.

To achieve the full advantage of the present invention, the composition preferably includes a liquid clay binder in an amount of at least 15% by weight. The liquid binder may include one or more gelling agents in accordance with Clem Patent No.4,279,547. In accordance with this gelling embodiment, suitable non-aqueous liquids include any of the organics capable of gellation by any suitable gelling agent. For example, mineral oil; mineral spirits; naptha; kerosene; microcrystalline wax; linseed oil; aromatic liquids such as xylol; toluol; denatured ethanol; trichlorethylene; solvents such as n-butyl alcohol; methylisobutyl ketone; n-butyl acetate; toluene, and the like. The more viscous non-aqueous liquids are preferred so that a lesser amount of gelling agent is required to provide a cohesive mass.

Suitable gelling agents for the above organic liquids include paraffin wax; aluminum stearate; calcium stearate; lithium stearate; sodium N-octadecylterephthalamate; N-cocogammahydroxybutyramide; any of the oil thickening agents, such as the CARBOPOL® crosslinked polyacrylic acid resins; aluminum octoate together with a lower alcohol such as methanol or isopropanol; magnesium silicate such as AVIBEST-C® containing 37% by weight MgO, 43% by weight $SiO_2$, 4% by weight $Fe_2O_3$ hydrated with 12% water at 700°C., ATTAGEL® 50, dimethyldioctadecyl ammonium bentonite (BENTONE®), or any other gelling agent known to gel and thicken an organic (non-aqueous) liquid.

Tackifiers compatible with the water-swellable clay may be included for additional tack so long as the tackifiers do not substantially inhibit the swelling capacity of the clay. Additional compatible tackifiers may include, for example, aliphatic petroleum hydrocarbon resins such as polyisobutylene, polyterpenes, hydrogenated resins, and mixed olefins. Generally, aromatic tackifiers are not suitable since they will bleed to the surface of the composition and separate thereby reducing the handleability and consistency of the composition. Other additives such as viscosity controlling agents, fillers, tackifiers and the like may be added in a total amount up to about 20% by weight of the bentonite composition to impart any desired physical characteristics to the composition.

Preferably, essentially no silicic filler should be added to the composition.

Evaporative solvents, such as mineral spirits, may be added to the composition of the present invention to aid in mixing, but it is preferred to combine the composition components without such solvents. In any case, the liquid bentonite clay binder(s) should be present in the final composition, after evaporation of any solvents volatilizable under ambient conditions, in an amount of at least 10% by weight.

In accordance with a preferred embodiment of the present invention, no additives are necessary to protect the swellable clay since polypropenes and polybutenes will completely wet out the bentonite in amounts up to about 90% by weight bentonite without inhibiting the swelling characteristics of the bentonite. The polypropene and/or polybutene component increases the capacity of the bentonite to swell while providing sufficient tack so that the composition easily can be adhered to substantially any support surface over extended periods of time.

The water-swellable colloidal clay utilized in the present invention is any water-swellable colloidal clay that will hydrate in the presence of water, i.e., will swell in the presence of water. In accordance with one important embodiment of the present invention, the colloidal clay is bentonite. A preferred bentonite is sodium bentonite which is basically a hydratable montmorillonite clay of the type generally found in the Black Hills region of South Dakota and Wyoming. This clay has sodium as a predominant exchange ion. However, the bentonite utilized in accordance with the present invention may also contain other cations, such as magnesium and iron. There are cases wherein a montmorillonite predominant in calcium ions can be converted to a high swelling sodium variety through a well known process called "peptizing". The colloidal clay utilized in this invention may be one or more peptized bentonites. The colloidal clay may also be any member of the dioctahedral or trioctahedral smectite group or mixtures thereof. Examples are Beidellite, Nontronite, Hectorite and Saponite. The colloidal clay, i.e., bentonite, generally is finely divided as known for use in water barrier panels and the like, e.g., 150 to 350 mesh.

The polybutenes and polypropenes useful in accordance with the preferred embodiment of the present invention are fully disclosed in this assignee's prior patents 4,534,925; 4,534,926; and 4,668,724.

The addition of an elastomer in an amount of about 1% to about 20% based on the total weight of the bentonite composition of the present invention will substantially increase the handleability of the composition without impeding its swellability. To achieve the full advantage of this embodiment of the present invention, the elastomer should be included in an amount of about 2% to about 10% based on the total weight of the composition. It has been found that mastication or shearing, i.e. in a sigma blender, of a composition containing a water-swellable clay, such as bentonite, a non-aqueous binder, such as polypropene and/or polybutene, and an elastomer, actually increases the capacity of the composition to swell in an amount greater than the bentonite alone; and greater than the bentonite, polypropene/ polybutene composition without the elastomer. Some useful elastomers are fully disclosed in this assignee's prior patents 4,534,925; 4,534,926; and 4,668,724.

In accordance with another important feature of the present invention, the bentonite compositions disclosed herein can include additives capable of forming a skin on the composition, such as a copolymer of vinyl toluene with a vegetable drying oil. The compositions containing skins are useful wherever the composition does not require tackiness for securing the composition to its intended location. Alternatively, if tackiness is desired, a surface coating of any suitable tackifier may be applied over the skin.

In accordance with an important feature of the present invention, a water-swellable composition is adhered to a support material, wherein the composition includes a water-swellable clay, such as bentonite, in an amount of 35-90% by weight, an elastomer in an amount of 1-20% by weight, and any plasticizer compatible with the elastomer and capable of plasticizing the elastomer, in an amount of about 2% to about 50% by weight based on the total weight of the composition.

The plasticizer improves the workability of the elastomer, extends the elastomer, enables the elastomer to re-position itself with expansion of the water-swellable clay without composition sagging, when the clay is wetted, and wets the bentonite surface sufficiently to enable the elastomer to accept substantial amounts of bentonite (up to about 90%) and to provide a homogeneous bentonite distribution throughout the elastomer.

Suitable plasticizers are the relatively low polarity plasticizers including epoxidized oils, such as epoxidized soybean oil; alkyl monesters, such as butyl oleate; long chain partial ether esters, such as butyl cellosolve oleate; long chain alkyl diesters, such as dioctyl adipate and dioctylphthalate; and petroleum-derived plasticizers, such as aromatic-napthenic oils, napthenic-aromatic oils, napthenic-paraffinic oils, and paraffinic oil. To achieve the full advantage of this embodiment of the present invention, the plasticizer should be included in the composition in an amount of at least about 10% by weight of the composition to plasticize the elastomer and fully wet-out the bentonite. The plasticizers generally are included in an amount of about 10% to about 30% based on the total weight of the composition.

The invention will now be describe further by way of example with reference to the accompanying drawings, in which:-

Fig. 1 is a schematic view of the apparatus used to manufacture the composition and articles of the present invention;

Fig. 2 is a partially broken-away perspective view of the composition of the present invention formed into an elongated, rectangular shape having a support sheet of flexible film on fabric centrally embedded therein;

Fig. 3 is a partially broken-away perspective view of the composition of the present invention formed into an elongated, rectangular shape having a sheet of flexible fabric embedded in one major surface;

Fig. 4 is a partially broken-away perspective view of the composition of the present invention formed into an elongated, rectangular shape having a flexible support rope centrally embedded therein.

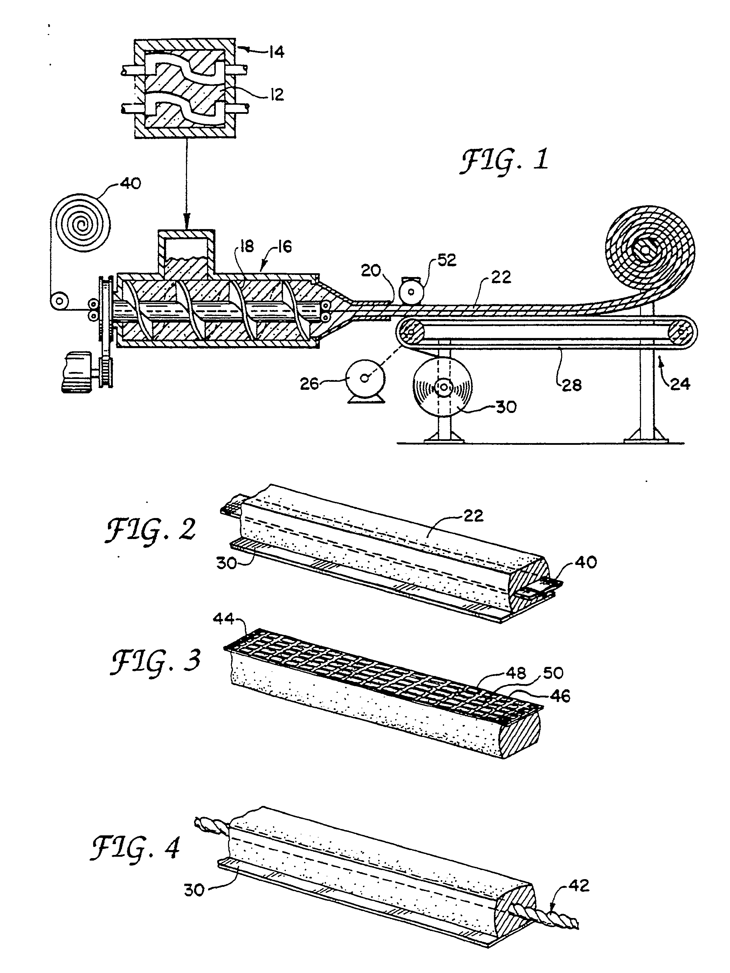

Turning now to the drawings, and initially to FIG. 1, apparatus is illustrated in schematic form for extruding the compositions of the present invention into rod and sheet forms supported by a structural support material in sheet or rope form. The bentonite composition 12 comprising an intimate mixture of bentonite with one or more liquid, non-aqueous binders, such as polypropene and/or polybutene and/or with a plasticizer, is thoroughly blended in a homogeneous blend with an elastomer, such as butyl rubber, in sigma blender 14 to fully masticate the elastomer and to deliver a homogeneous bentonite composition into extruder 16. Auger 18 of extruder 16 forces the bentonite composition through a die opening 20 of any desired shape, for example the rod form shown in FIGS. 2-4, to form a continuous elongated mass of the composition in an essentially rectangular cross-sectional shape, 22. The die opening 20 may be of any desired cross sectional configuration.

In accordance with an important feature of the present invention, the elongated mass forming article 22 includes a flexible structural support material at least partially embedded in the composition 12. In the embodiment shown in FIG. 2, the flexible structural support material is a fabric or polymeric film 40 embedded along a longitudinal axis of the shaped composition 22 centrally within the composition and, in a preferred embodiment, extends continuously essentially longitudinally and laterally coextensive with the length and width of the shaped composition 22. The shaped composition 22, forced by auger 18 through die opening 20, is directed onto a conveyor 24 capable of being driven at a variety of predetermined speeds by conveyor motor 26. By varying the speed of the conveyor 24 relative to the speed at which the extruded composition 22 exits the die opening 20, the extruded composition can be stretched or compressed slightly to vary the dimensions of the extruded clay composition 22. The conveyor 24 includes a suitable conveyor belt 28 and a continuous supply of release paper 30 or fabric 44 directed over the conveyor belt 28 for contact against a surface of the shaped composition 22. The shaped composition 22 and the release paper 30 or fabric 44 are wound around a take-up roller 32 as the composition is extruded onto the release paper 30 or fabric 44 to provide the composition in a coiled, rope-like form. The extruder 16 can include an elongated die opening (not shown) to provide the shaped composition in sheet or other forms.

In the embodiment shown in FIG. 4, the structural support material is a rope 42 generally comprising a plurality of strands of natural or synthetic fibers twisted or braided together. One particularly suitable rope is formed of nylon and, in accordance with a preferred embodiment, the rope 42 is centrally disposed such that the composition 12 does not extend more than about $\frac{1}{2}'$ beyond any exterior surface of the rope 42. The rope 42 is embedded along a longitudinal axis of the shaped composition 22 centrally within the composition and, in a preferred embodiment, extends continuously essentially longitudinally coextensive with the length of the shaped composition 22. As shown in FIG. 1, the structural support materials 40 and 42 are disposed centrally within the shaped composition 22, during manufacture, to be completely surrounded by the composition. The woven or nonwoven fabric 40 or the rope 42 is disposed centrally within the composition by inserting the fabric or rope into the composition at a point upstream of the extruder die opening 20, so that the flow of the composition 12 through the die opening will pull the fabric 40 or rope 42 out of the die opening together with the composition 12. Alternatively, the shaped mass 22 can be initially formed in two halves, split longitudinally, and the fabric or rope inserted between the two halves, along a longitudinal axis, and the two halves forced together to sandwich the fabric 40 or rope 42 therebetween.

In another embodiment, shown in FIG. 3, a mesh or fabric material, generally designated 44, including a plurality of longitudinally spaced fibers 46 secured, such as by weaving, to a plurality of transversely spaced fibers 48 forming a plurality of essentially constant area void spaces 50 therebetween, can be embedded into a major surface of the shaped composition 22, such as by pressure roller 52 forcing the composition to essentially fill the void spaces 50. In this embodiment, the mesh or fabric 44 can be applied by substituting the mesh or fabric 44 for the release paper 30 (FIG. 1).

In accordance with another embodiment of the present invention, the shaped composition 22 can include a mesh or fabric 44 on one major outer surface and a non-woven fabric on an opposite major outer surface. This composition having structural support material adhered to opposite major surfaces can be fastened to a surface, such as a foundation wall, such as by disposing the shaped composition 22 against a surface of potential water flow with the mesh or fabric 44 facing outwardly, and nails driven through the article and into the support surface.

The foregoing detailed description is given for clearness of understanding only, and no unnecessary limitations should be understood therefrom, as modifications within the scope of the invention will be apparent to those skilled in the art.

## Claims

1. An article of manufacture useful for preventing a flow of water therethrough by hydration of a water-swellable clay composition comprising a cohesive mass of a water-swellable clay (12) in essential non-hydrated form, said water-swellable clay (12) present in an amount of at least 20% by weight of the total composition, and a non-aqueous liquid binder capable of adhering the clay together without substantial hydration of said clay, said composition having a flexible, elongated structural support material (40; 42; 44) embedded in said composition to prevent the composition from being displaced from its intended location in use.

2. An article as claimed in claim 1, wherein the flexible structural support material is a rope (42) comprising a plurality of strands of natural or synthetic fibres twisted or braided together.

3. An article as claimed in claim 2, wherein the rope (42) is longitudinally embedded centrally within the clay composition.

4. An article as claimed in claim 1, wherein the flexible structural support material comprises a mesh material (44) formed from a plurality of longitudinally spaced fibres (46) secured to a plurality of laterally spaced fibres (48) forming a plurality of void spaces (50) therebetween, said fibres embedded into a major outer surface of the clay composition.

5. An article as claimed in claim 1, wherein the flexible structural support material comprises a film of synthetic polymer material (40) embedded centrally across a majority of a width of the clay composition.

6. An article as claimed in claim 1 wherein the flexible structural support material comprises a sheet of woven or non-woven fabric embedded in a major outer surface of the composition.

7. An article as claimed in claim 1 wherein the flexible structural support material includes a woven fabric material embedded in one major surface of the composition and a non-woven fabric adhered to an opposite major surface of the composition.

8. An article as claimed in any one of the preceding claims, wherein the composition includes an elastomer in an amount of about 1% to about 20% based on the total weight of the composition.

9. An article as claimed in claim 8, wherein the composition includes a plasticizer, capable of plasticizing the elastomer, in an amount of about 2% to about 50% based on the total weight of the composition.

10. A method of preventing the flow of water through a predetermined area of potential water flow comprising fastening an article as claimed in any one of the preceding claims to said area of potential water flow.

11. A method as claimed in claim 10, including the step of disposing the non-woven fabric against a support surface at the area of potential water flow and driving a fastener through the composition, from the woven fabric surface, and into the support surface.

12. A method of making an article as claimed in any one of claims 1 to 9 which comprises embedding a flexible structural support within a composition comprising a cohesive means of a water swellable clay so that at least most of the support material is surrounded by said composition.

*FIG. 1*

*FIG. 2*

*FIG. 3*

*FIG. 4*